(19) Europäisches Patentamt
European Patent Office
Office européen des brevets

(11) Numéro de publication: **0 070 216**
**B1**

(12) # FASCICULE DE BREVET EUROPEEN

(45) Date de publication du fascicule du brevet: **13.11.85**

(21) Numéro de dépôt: **82401185.2**

(22) Date de dépôt: **28.06.82**

(51) Int. Cl.⁴: **B 01 J 10/00**, B 01 J 15/00, B 01 J 19/26, C 01 B 25/30, C 01 B 25/41, C 01 B 25/42, A 23 L 3/34, C 11 D 3/06

(54) **Procédé de traitement thermique et/ou chimique homogène d'un fluide, et application aux phosphates minéraux de synthèse.**

(30) Priorité: **06.07.81 FR 8113222**

(43) Date de publication de la demande: **19.01.83 Bulletin 83/3**

(45) Mention de la délivrance du brevet: **13.11.85 Bulletin 85/46**

(84) Etats contractants désignés: **AT BE CH DE FR GB IT LI LU NL SE**

(56) Documents cités:
**FR - A - 2 257 326**
**FR - A - 2 419 754**
**FR - A - 2 431 321**

**CHEMICAL ABSTRACTS, vol. 94, no. 11, 16 mars 1981, page 628, colonne de droite, no. 82959x, Columbus Ohio (USA); M. EBERT et al.: "Preparation of pure oligomeric potassium phosphates".**

(73) Titulaire: **RHONE-POULENC CHIMIE DE BASE, 25, quai Paul Doumer, F-92408 Courbevoie (FR)**

(72) Inventeur: **Bourgeois, Jean-Paul, 17 Villa du Petit Parc, F-94000 Créteil (FR)**
Inventeur: **Prudhon, François, 2, rue Delaunay, F-78000 Versailles (FR)**
Inventeur: **Couffin, Frédéric, 8bis rue Pierre Corneille, F-91230 Montgeron (FR)**
Inventeur: **Magnier, Claude, 3, rue des Chaufourniers, F-75019 Paris (FR)**

(74) Mandataire: **Martin, Henri et al, RHONE-POULENC RECHERCHES Service Brevets Chimie et Polymères 25, quai Paul Doumer, F-92408 Courbevoie Cedex (FR)**

**EP 0 070 216 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention a trait à un traitement thermique et/ou chimique homogène d'une phase dispersable fluide telle que liquide pouvant éventuellement contenir des matières solides en suspension.

Elle s'applique en particulier aux procédés de traitement qui partant d'un milieu doivent conduire à au moins une espèce bien déterminée, au cours d'une évolution présentant des possibilités de réactions parallèles et parasites, et/ou la formation au moins probable de composés intermédiaires.

Ces types de problèmes délicats sont en particulier illustrés par les cas de fabrication de polyphosphates alcalins comme par exemple les tripolyphosphates de Na et K (triphosphates de Na et K).

Théoriquement on peut obtenir du tripolyphosphate de sodium selon le schéma:

$$\underset{\text{solution}}{NaH_2PO_4} + 2\ \underset{\text{solution}}{Na_2HPO_4} \xrightarrow{\text{traitement thermique}} Na_5P_3O_{10} + 2\ H_2O$$

mais la réalité est beaucoup plus complexe. Il se forme notamment du pyrophosphate neutre et des polyphosphates à chaines plus ou moins longues, ce qui se traduit en particulier par la production d'insolubles. On comprend aisément que le système réactionnel est difficile à contrôler, ce qui explique l'existence d'une littérature importante et ancienne sur le sujet. De manière schématique l'on peur dire que l'on fait appel soit à des procédés en deux étapes, soit à des procédés en une étape.

Ainsi on a proposé dans US-A-2 419 149 des tripolyphosphates de Na de formule $(Na_5P_3O_{10})x$ où x est au moins égal à 1 et de solubilité dans l'eau améliorée. Dans US-A-2 419 147 on a aussi proposé de former une solution dans l'eau d'un matériau comprenant entre 5 et 6 moles de $Na_2O$ pour 3 moles de $P_2O_5$, de diviser la solution et de faire subir un traitement de séchage flash à ladite solution finement divisée, puis de chauffer le sel solide obtenu entre 250 et 600° C. En fait la solution est atomisée dans un milieu suffisamment chaud pour provoquer un effet flash. Il s'agit donc d'un procédé assez complexe et surtout difficile à contrôler.

On a aussi décrit dans le DE-C-649 757 un procédé de fabrication de méta et polyphosphate à partir d'orthophosphates par traitement dans une zone de gaz très chaud ou une flamme, puis refroidissement.

Selon US-A-3 385 661 on produit un TPP de phase II par atomisation d'une solution aqueuse d'orthophosphate de rapport $Na_2/O/P_2O_5=5/3$ dans une tour d'atomisation maintenue à une température de 180—280° C de manière à obtenir un produit intermédiaire consistant principalement en pyrophosphate, puis en calcinant ce produit intermédiaire dans un four rotatif maintenu à une température de 150—450° C pour le transformer en tripolyphosphate de phase II.

En variant les conditions on peut obtenir un TPP de phase I comme dans US-A-3 387 929.

D'une manière plus générale dans US-A-3 338 671 on a revendiqué un procédé de granulation de tripolyphosphate de sodium qui consiste à atomiser une solution d'orthophosphate et à calciner ensuite. On précise même dans ce brevet que l'on peut obtenir directement le TPP par atomisation, si l'atomiseur est construit de manière adéquate, sans toutefois décrire cette manière adéquate.

Malheureusement, tout le problème est là.

On a aussi proposé dans le brevet allemand 1 097 421 de soumettre une solution d'orthophosphate à la pulvérisation à l'intérieur d'une tour spéciale par passage à travers une couronne de flamme, de manière à déshydrater les gouttelettes individuelles.

Ce procédé présente l'inconvénient de soumettre les gouttelettes, lors de leur traversée dans la zone de flamme, à des températures diverses. C'est pourquoi on a proposé diverses solutions pour y porter remède comme de jouer sur la pression partielle de la vapeur d'eau, voir le brevet allemand 1 007 748. Malheureusement comme explicité dans FR-A-1 535 819 ces solutions ne sont satisfaisantes que dans des cas bien particuliers.

C'est pourquoi, l'on a été amené à proposer diverses améliorations portant par exemple sur la zone de flamme elle-même, comme dans US-A-3 499 476. On doit donc considérer que l'état technique est constitué par un grand nombre de tentatives pour résoudre le problème portant soit sur la chimie, soit sur la technologie du procédé, et plus difficilement des deux.

En fait l'on a abservé que lorsqu'une solution ne correspond pas à la formation d'un composé défini unique par séchage, il apparaît une ségrégation (cristalline) pendant la phase d'évaporation. La composition du solide que se forme progressivement est différente de celle de la solution et évolue au cours du séchage. Cet état correspond à des systèmes en équilibre thermodynamique et peut être modifié par la cinétique des phénomènes mis en jeu pendant le processus thermique.

D'une manière générale on sait que lors des opérations physico-chimiques, s'opèrent des transferts de matière et de chaleur et que la cinétique de ces transferts est limitée, le plus souvent par la diffusion à travers l'interface entre liquide et gaz.

Ceci se traduit par le fait que quels que soient les moyens physiques et/ou chimiques, mis en œuvre jusqu'à ce jour, l'on ne sait pas réaliser certaines évolutions.

Ces remarques sont parfaitement illustrées par les résultats obtenus par exemple lors des essais de

synthèse du tripolyphosphate de sodium à partir d'une solution d'orthophosphates de sodium de rapport global Na/P = 1.667. La cristallisation de cette solution correspond à un mélange d'orthophosphates de rapport Na/P différents (orthophosphates, mono- et disodiques), qui peuvent évoluer de manière isolée.

Ceci explique les échecs observés lors de la mise en œuvre des procédés suivant les deux types d'obtention dudit tripoplyphosphate de sodium selon l'art antérieur.

L'on sait par ailleurs que l'on a revendiqué un procédé de traitement avec dispersion d'une phase liquide ou semi-liqide pouvant éventuellement contenir des matières solides en suspension selon FR-A-2 257 326. Il consiste en un procédé de mise en contact de substances dans des phases différentes selon lequel on forme un écoulement puits-tourbillon symétrique par introduction d'une phase gazeuse, et introduction d'au moins une autre phase non gazeuse selon l'axe de symétrie de rotation dudit écoulement jusque sensiblement dans la zone de dépression de l'écoulement puits-tourbillon. On impartit au dit écoulement puits-tourbillon une quantité de mouvement suffisamment importante par rapport à celle de la phase introduite axialement pour que la dispersion de cette phase se produise par transfert de la quantité de mouvement. On forme ainsi des couples d'éléments de volume de la phase gazeuse et de la phase axiale, sur les trajectoires issues de la phase gazeuse, et ne dépendant que de l'historie antérieure de cette phase gazeuse.

Pratiquement le rapport des quantités de mouvement est d'au moins 100, de préférence de 1000 à 10 000, la vitesse d'introduction de la phase axiale est faible, de préférence inférieure à 10 m/s. La pression sur la phase gazeuse est également faible, inférieure à $10^5$ Pa, et de préférence de 0,4 à 0,6 $10^5$ Pa au-dessus de la pression du mélange.

Ce procédé permet notamment d'appliquer un fort écart de température entre la phase de traitement (gaz) et la phase fluide à traiter (solution ou suspension). Il présente également l'avantage de comporter une zone de type piston en ce qui concerne les concentrations, et de type flash en ce qui a trait aux températures.

L'objet de la présente invention est un procédé de traitement thermique et/ou chimique d'au moins une matière dispersable fluide dans des conditions qui permettent une cinétique très rapide de transfert notamment thermique entre la ou les substances dispersables et au moins une phase dispersante.

Ce procédé constitue un moyen nouveau et inattendu de traitement de la matière.

Il consiste en un procédé de traitement thermique d'une phase dispersable fluide telle que notamment liquide, semi-liquide, ou pulvérulente par une phase gazeuse dispersante qui se caractérise par le fait que, successivement et sans discontinuité, par action de la phase gazeuse:

a) la phase dispersable est tranformée en une dispersion de volumes élémentaires, tels que fines particules solides ou liquides, sensiblement équirépartis dans ladite phase gazeuse, de manière à obtenir un mélange systématiquement homogène des deux phases dispersable et dispersante;
b) cette dispersion subit un traitement thermique flash dans une zone à écoulement de type piston par échange thermique à l'aide de la phase dispersante;
c) la dispersion est soumise, dans une zone à écoulement homogène, au sens de la répartition des temps de séjour, à un traitement sensiblement isotherme en phase gazeuse chimiquement homogène.

La durée de la première étape doit être telle que le mélange soit réalisé dès le début du traitement thermique.

Par traitement flash (zone b) on entend un traitement de courte durée, de préférence inférieure à la seconde, par action d'un fort écart de température pouvant atteindre plusieurs centaines de degrés entre les phases dispersante et dispersable et correspondant à un transfert de chaleur intense entre les phases dispersable et dispersante.

Plus particulièrement selon l'invention, la phase gazeuse dispersante remplit trois fonctions:

1. former la dispersion,
2. réaliser un premier traitement flash dans une zone à répartition de type sensiblement piston,
3. produire un second traitement dans des conditions de cinétique et de thermodynamique différentes de celles de la zone précédente.

On obtient ainsi un enchainement d'opérations unitaires bien cohérent dans un laps de temps qui peut être extrêmement bref, et dont le nombre n'est pas limité par l'énumération ci-dessus.

On a schématisé en annexe aux figures 1 et 2, un modèle de comportement qualitatif d'un tel système. Les abscisses des figures 1, 2 et 3 sont à considérer indépendamment les unes des autres.

La figure 1 représente dans le cas d'un modèle à trois étapes le schéma hydrodynamique des phases, où G représente le faz et F le fluide dispersé, l'échelle des temps (t) n'a que valeur du sens de l'écoulement du temps.

La figure 2 illustre l'écart de température (T = TG = TF) entre les phases dans les différentes étapes. On peut schématiquement considérer que dans la deuxième étape (zone b), l'écart de température

entre les phases est très grand pour un temps de contact très faible, alors que dans la troisième étape (zone c) la situation est complètement différente.

L'on se trouve donc devant un réacteur nouveau permettant des types d'évoultion tels que figurés à la figure 3 correspondant au cas particulier d'un liquide L conduisant à un solide S. Ce schéma illustre que de manière simple l'on peut agir sur les étapes b et c pour contrôler ou fixer les évolutions. Le procédé se caractérise notamment par le fait que son évolution thermodynamique et chimique dans la zone c est définie par celle de TG—TF dans les zone a et b.

De cette façon, dans ce cas où le fluide dispersé est un liquide, la zone c peut correspondre à un domaine thermodynamique de fonctionnement d'un réacteur solide/gaz, ou gaz-gaz, alors que l'on a introduit initialement un liquide et un gaz.

Pratiquement selon le procédé de l'invention, la température et/ou la composition chimique de la zone c sont définies par la variation de température subie par la phase dispersante dans la zone b en sorte que l'échange thermique est localisé dans la zone b.

La température de la zone c correspond à celle nécessaire à la cinétique de la transformation que l'on veut obtenir à partir d'un écart faible entre la température de la phase gazeuse dispersante et celle de la phase dispersée. En revanche, la température d'entrée dans la zone b est déterminée en tenant compte du fait que l'échange thermique entre les deux phases initiales a pratiquement lieu dans la zone b.

Ainsi tout se passe comme si le procédé selon l'invention permettait une utilisation sélective de l'énergie apportée de la phase dispersante.

En effet, celle-ci est affectée plus spécifiquement en a, par utilisation de l'énergie cinétique à la formation du mélange et, en b, par utilisation de l'énergie thermique, à la transformation physico-chimique de la phase dispersée.

Par exemple, si la phase dispersée est une solution, l'énergie thermique est affectée plus spécifiquement à la particule pendant l'évaporation (c'est-à-dire à une transformation fortement endothermique) ce qui constitue un moyen nouveau et inattendu de traitement de la matière.

De plus, la particule solide ou liquide générée est protégée thermiquement pendant et aussi après sa formation, puisqu'elle évolue, et si nécessaire se transforme chimiquement et/ou physiquement, dans un milieu sensiblement isotherme. Enfin, elle évolue dans une phase gazeuse chimiquement homogène dont la composition (pression partielle d'eau par exemple) et la température, peuvent être spécifiquement ajustées (zone c).

On peut ainsi admettre que les transformations indésirables du produit recherché ne peuvent avoir lieu (pour le modèle choisi à trois étapes), dans la mesure où les conditions thermodynamiques du système, fixées à partir de la zone piston b, ne leur permettent pas de se réaliser.

De plus, il y a lieu de souligner que les régimes d'écoulement successifs établis à l'aide de la phase dispersante sont particulièrement bien appropriés aux traitements en continu de la matière dans des cas tels que:

— séchage suivi de calcination
— séchage (endothermique) suivi d'une combustion (exothermique)
— séchage suivi d'une thermocondensation.
— etc...

En effet, l'équirépartition initiale en zone a peut comporter une légère dispersion des divers paramètres autour le leur moyenne. Ceci se traduit alors par une dispersion des conditions thermodynamiques imposées à la particule à l'entrée de la zone c (température, compositions chimiques de la phase dispersante...).

On pouvait s'attendre à ce que cette dispersion provoque une disparité des traitements d'une particule à l'autre. On observe qu'au contraire la zone c provoque une réhomogénéisation des conditions de traitement.

Selon une forme particulière de l'invention on effectue une transformation endothermique dans la zone b, suivie d'une autre transformation endothermique ou exothermique dans la zone c.

On peut aussi prévoir à la sortie de la zone c un autre traitement tel que thermique, par exemple par la phase gazeuse (zone d).

Comme il est dit précédemment, un procédé bien adapté pour la réalisation d'une dispersion à l'entrée d'une zone à écoulement piston est décrit dans FR-A-2 257 326.

Selon un mode de réalisation de l'invention, on réalise un écoulement puits-tourbillon symétrique, par introduction d'une phase gazeuse et d'au moins une autre phase selon l'axe de symétrie de rotation dudit écoulement, jusque sensiblement dans la zone de dépression de l'écoulement puits-tourbillon. On impartit au dit écoulement puits-tourbillon une quantité de mouvement suffisamment importante par rapport à celle de la phase introduite axialement, pour que la dispersion de cette phase se produise par transfert de la quantité de mouvement et son traitement par la phase gazeuse dans la zone piston formée par l'écoulement puits-tourbillon qui se caractérise par le fait que l'on règle la température d'entrée des gaz de manière à former en aval de la zone piston une zone sensiblement isotherme et chimiquement homogène.

Ainsi selon l'invention la phase gazeuse dispersante sert successivement à former le mélange, et à réaliser deux réacteurs à caractéristiques différentes en série, ce qui est un problème particulièrement ardu, dès lors que l'on veut travailler en continu et à l'échelle industrielle.

Selon l'invention on y parvient au contraire de manière simple en agissant sur l'hydrodynamique de la phase dispersante et sa température initiale.

Pratiquement dans un but économique, l'on donne à la phase dispersable une vitesse initiale faible de préférence à 10 m/s., et si possible à 5 m/s. de manière à pouvoir réduire la quantité de mouvement initiale de la phase dispersante. Le rapport des quantités de mouvement de la phase gazeuse à la phase dispersible pour être suffisant est habituellement au moins égal à 100, mais se situe généralement, de préférence, entre 1000 et 10 000.

On applique aussi des pressions faibles sur la phase gazeuse inférieure à $10^5$ Pa, et avantageusement entre 0,4 et 0,6 $10^5$ Pa au-dessus de la pression moyenne dans la zone c. Mais l'on ne sortirait pas du cadre de l'invention en augmentant cette pression dans la mesure où l'on respecte le rapport des quantités de mouvement.

Simplement il va de soi que l'on doit se mettre dans les conditions économiquement les meilleures répondant aux exigences techniques.

Un procédé et un dispositif également recommandables sont décrits dans FR-A-2 431 321.

Une application illustrative de l'invention réside dans la fabrication du tripolyphosphate de sodium à partir de solutions d'orthophosphates de rapports Na/P différents.

Que ce soit dans le domaine alimentaire (sels de fonte, charcuterie salaison) ou dans certaines applications industrielles telles que la détergence, le tripolyphosphate de sodium est en général utilisé en solution; la présence d'insolubles peut alors être gênante.

Ces derniers sont introduits soit en amont du procédé de préparation du TPP (par les matières premières), soit lors de la thermocondensation des orthophosphates.

Avant calcination, il s'agit surtout de traces de phosphates métalliques présentes dans l'acide phosphorique et qui ne précipitent qu'incomplètement lors de la neutralisation de $H_3PO_4$ par NaOH. En règle générale, le taux de ces insolubles est très faible.

En revanche, après calcination des orthophosphates, on note souvent la présence de $(NaPO_3)_n$ insoluble à des taux importants variables selon les conditions de la thermocondensation. Cet insoluble provient uniquement de la calcination complète des orthophosphates au rapport Na/P=1 suivant la réaction:

$$NaH_2PO_4 \quad Na_2H_2P_2O_7 \quad Na_nH_2P_nO_{3n+1} \quad (NaPO_3)_n$$

Tout mécanisme des formation de TPP avec défaut d'homogénéité (au niveau des ortho ou des pyrophosphates) conduit à la présence d'impuretés phosphatées (dont l'insoluble $(NaPO_3)_n$).

Or ceci est vrai même si le rapport Na/P est globalement bien ajusté à l'échelle macroscopique.

Ce qui amène à considérer à l'échelle microscopique les cas suivants:

1) rapport Na/P=5/3
2) rapport Na/P≠5/3

1°) Na/P=5/3

Si le mélange est homogène, on obtient un TPP sans impuretés selon le mécanisme couramment admis:

$$2\ NaH_2PO_4 \longrightarrow Na_2H_2P_2O_7 + H_2O$$

$$\searrow \ 2\ Na_5P_3O_{10} + 4\ H_2O$$

$$4\ Na_2HPO_4 \longrightarrow 2\ Na_4P_2O_7 + 2\ H_2O \ \nearrow$$

$$2\ NaH_2PO_4 + 4\ Na_2HPO_4 \longrightarrow 2\ Na_5P_3O_{10} + 4\ H_2O$$

Un autre mécanisme possible (passage par le pyrotrisodique) conduit au même résultat:

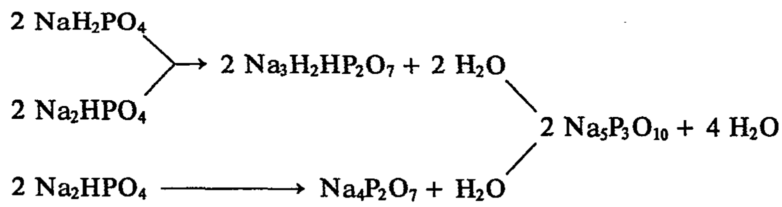

$$2\,NaH_2PO_4 + 4\,Na_2HPO_4 \quad \cdot \quad 2\,Na_5P_3O_{10} + 4\,H_2O$$

2°) Na/P = 5/3

Si le mélange n'est pas homogène, ceci signifie que localement l'on va se trouver soit en défaut, soit en excès rapport au mélange Na/P global.

2.1 Pour un rapport Na/P inférieur à 5/3, on constate soit la présence d'insolubles selon le premier mécanisme, soit de polyphosphates courts selon le second mécanisme.

Premier mécanisme

2 $\varepsilon$ représente la quantité d'orthophosphate monosodique correspondant au défaut du rapport Na/P.

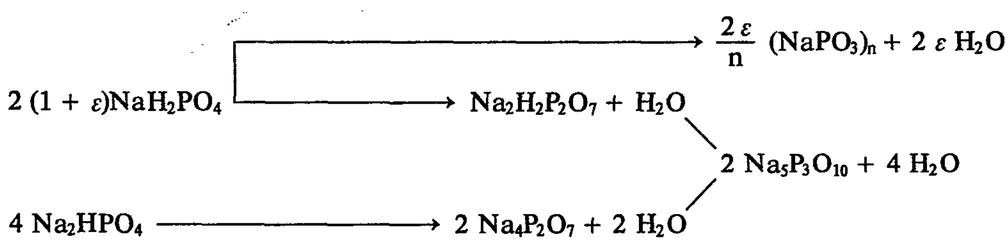

$$2\,(1+\varepsilon)NaH_2PO_4 + 4\,Na_2HPO_4 \longrightarrow 2\,Na_5P_3O_{10} + \frac{2\varepsilon}{n}\,(NaPO_3)_n + 2\,(2+\varepsilon)H_2O$$

Second mécanisme

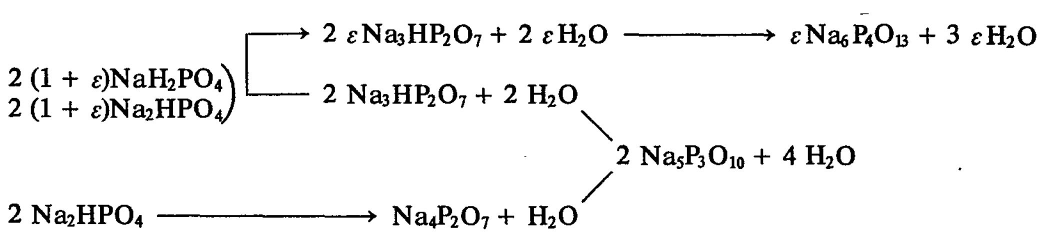

$$2\,(1+\varepsilon)NaH_2PO_4 + 2\,(2+\varepsilon)Na_2HPO_4 \longrightarrow 2\,Na_5P_3O_{10} + \varepsilon\,Na_6H_4O_{13} + (4+3\,\varepsilon)H_2O$$

2.2 Pour des rapport Na/P > 5/3, on obtient un produit calciné contenant du TPP et du pyroneutre selon la réaction suivante. (2 $\varepsilon$ représente la quantité d'orthophosphate disodique correspondant à l'excès du rapport Na/P):

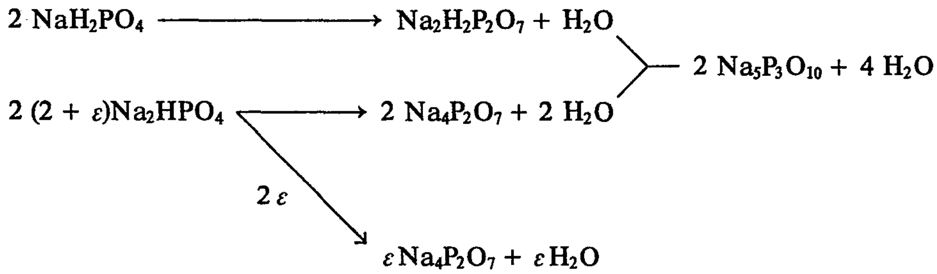


$$2\,NaH_2PO_4 + 2\,(2+\varepsilon)Na_2HPO_4 \longrightarrow 2\,Na_5P_3O_{10} + (4+\varepsilon)H_2O + \varepsilon\,Na_4P_2O_7$$

Ceci illustre donc le fait que même en partant d'un milieu de rapport Na/P globalement égal à 5/3, il peut se produire des évolutions indésirables qui peuvent conduire à la présence d'insolubles, par exemple.

Les réactions précédentes montrent en effet que l'on admet généralement que les orthophosphates solides, précurseurs du TPP, obtenus par séchage soit en four tournant, soit en atomiseur, sont formés respectivement de mélanges plus ou moins intimes de $NaH_2PO_4$ et $Na_2HPO_4$ d'une part, de $Na_3H_3(PO_4)_2$ et $Na_2HPO_4$ d'autre part.

Ces mélanges d'orthophosphates conduisent, suivant les procédés, par calcination à divers pyrophosphates ($Na_2H_2P_2O_7+Na_4P_2O_7$) ou ($Na_3HP_2O_7+Na_4P_2O_7$) sous forme cristalline ou amorphe. Le TPP est alors obtenu par la thermocondensation de des mélanges de pyrophosphates.

A la connaissance de la demanderesse quels que soient les procédés, le mélange obtenu après séchage est toujours composé d'au moins deux entités cristallines bien connues et répertoriées dans le diagramme d'équilibre $Na_2O-PSO_5-H_2O$.

Ceci signifie donc que les procédés de l'art antérieur provoquent une ségrégation cristalline des orthophosphates ou des pyrophosphates.

Or de manière surprenante, en mettant en œuvre le procédé de l'invention avec une solution homogène d'orthophosphates mono et disodique ajustée au rapport théorique de 5/3, l'on fait les observations majeures suivantes:

1) Le produit final correspond à un nouveau produit pratiquement exempt de composés insolubles;
2) Il est possible d'isoler un nouvel orthophosphate de rapport Na/P=5/3 bien cristallisé qui possède un spectre de rayons X spécifique.

Autrement dit le procédé selon l'invention n'est pas équivalent à un ensemble mélangeur, sécheur, calcinateur connu puisque son comportement est différent, notamment vis à vis de la cristallisation des phases.

Dans l'état actuel de ces travaux, la demanderesse n'est pas en mesure de donner une explication certaine de ces résultats surprenants.

Elle a absevré que selon l'invention la ségrégation cristalline pouvait être fortement minimisée en:

- imposant une cinétique d'évaporation très rapide par l'intermédiaire de processus thermiques flash pour modifier profondément les conditions de nucléations et cristallisations (niveau de sursaturation) et obtenir ainsi un resserrement de la composition des cristaux obtenus autour d'une composition moyenne correspondant à la solution de départ (action de la zone b).
- provoquant un état de division très important par pulvérisation de la solution pour limiter à l'échelle de gouttelette de compositions identiques, les risques éventuels d'une ségrégation, facilitant en cela toute combinaison (homogénéisation) par diffusion au sein de la particule et évitant des évolutions divergentes des produits de cristallisation (action de la zone a).

D'autres applications selon la présente invention concernent la fabrication d'un certain nombre de phosphates, en une ou deux étapes, de rapport Na/P variant entre 1 à 3, et correspondant à la fabrication d'orthophosphates et de polyphosphates alcalins, notamment de sodium et de potassium. Les orthophosphates obtenus peuvent à leur tour être retraités thermiquement.

Selon l'invention, une solution de phosphates alcalins de rapport Me/P correspondant à celui du produit final, constitue la phase dispersable fluide, où Me représente le métal alcalin.

D'une manière générale, on note que dans le cas de la fabrication des orthophosphates de rapport Me/P<2, la température dans la zone c doit être faible, avantageusement inférieure à 180°C, et de préférence comprise entre 100 et 160°C, alors que dans les autres cas, la température dans la zone c est plus élevée et dépent du produit que l'on cherche à obtenir.

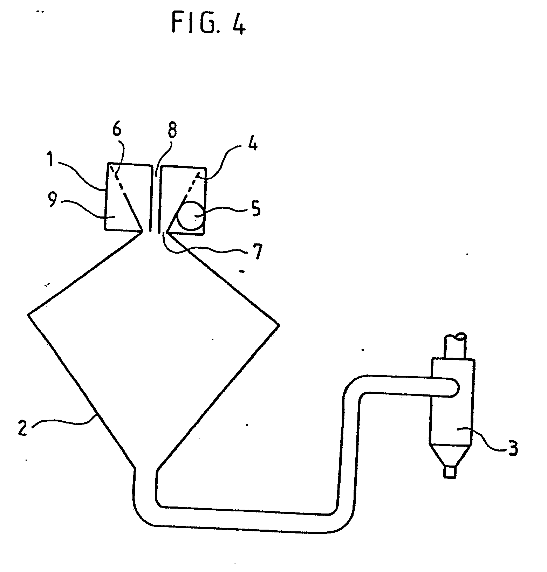

L'installation utilisée est schématisée à la figure 4 en annexe.

Elle comprend une tête de dispersion 1, un bicône de réception 2 et un cyclone 3.

La tête présente un panier perforé 4 définissant un espace annulaire 9 dans lequel débouche une entrée tangentielle 5. Cet espace permet de réaliser l'écoulement puits-tourbillon symétrique grâce à des orifices tels que 6 et au col 7.

La phase à traiter est introduite par un conduit axial 8 de manière à la conduire jusque dans la zone de dépression du puits-tourbillon c'est-à-dire dans la partie amont du bicône 2.

Les gaz de traitement sont amenés chauds dans l'espace annulaire.

Exemple 1

Cet exemple a pour but de mettre en évidence l'intérêt du procédé selon l'invention pour la préparation de TPP sans insoluble.

Une solution contenant 20,5% $P_2O_5$ et 14,9% $Na_2O$ (Na/P=1,664) est pulvérisée par un courant d'air chauffé à 880°C ayant un débit de 50 $Nm^3/h$. Le débit de la solution est ajusté de façon à obtenir une température de sortie des gaz et du produit de 405—420°C.

Le taux de transformation en TPP est de 97% et le taux d'insolubles est inférieur à 0,01%.

Dans une procéde classique (flamme ou four tournant), la calcination d'une solution de même rapport Na/P à une même température conduit à un mélange TPP 95% — insolubles — 3% — pyroneutre 2%.

Le taux d'insolubles est mesuré par la méthode suivante: 20 g de produit sont dissous dans 400 $cm^3$ d'eau et portés à ébullition pendant 10 mn. La solution est filtrée après refroidissement sur fritté n° 4 préalablement séché deux heures à 110° C. Le fritté contenant le précipité éventuel lavé est séché deux heures à 110° C. La différence de poids du fritté avant et après séparation permet de calculer le taux d'insolubles.

Exemple 2

Influence des divers facteurs sur le TPP

Les conditions de préparation des TPP sont les suivantes: la solution est obtenue par neutralisation de $H_3PO_4$ par NaOH de telle façon que l'on ait un rapport $Na_2O/P_2O_5$ compris entre 1,64 et 1,70 et un extrait sec compris entre 15 et 50%. Les gaz chauds sont introduits à une température comprise entre 880 et 950° C.

Les réglages de débit (de l'ordre de 50 $Nm^3/h$ dans les essais effectués) et de solution permettent de réaliser une zone isotherme compris avantageusement entre 390 et 450° C correspondant à la température du produit calciné (TPP).

On obtient du TPP sans impureté phosphatée si le rapport est bien ajusté à 5/3. On aboutit à un mélange TPP + pyroacide ou TPP + pyroneutre exclusivement si le rapport Na/P est man ajusté. Ainsi le taux de TPP obtenu est voisin de 90% dans l'exemple n° 6 et supérieur à 98% lorsque $T_s = 420°C$ et Na/P = 5/3 (essai O).

| Essais | $Na_2O$ % | $P_2O_5$ % | Na/P*) | Extrait sec % | $T_e$ entree gaz °C | $T_s$ sortie gaz °C | Phase I % | Densité appar. |
|---|---|---|---|---|---|---|---|---|
| 0 | 15,3 | 21,0 | 1,667 | 42 | 880 | 420 | 18 | 0,9 |
| Influence du rapport Na/P | | | | | | | | |
| 1 | 16,3 | 22,2 | 1,68 | 42 | 880 | 390 | 19 | 0,7 |
| 2 | 14,1 | 19,6 | 1,65 | 42 | 880 | 450 | 18 | 1,1 |
| Influence du taux d'extrait sec de la solution initiale | | | | | | | | |
| 3 | 14,1 | 19,6 | 1,65 | 15 | 950 | 420 | 28 | 0,7 |
| 4 | 14,1 | 19,6 | 1,65 | 42 | 880 | 450 | 18 | 1,1 |
| Influence de la température de calcination (température de sortie) | | | | | | | | |
| 5 | 14,1 | 19,6 | 1,65 | 42 | 880 | 400 | 37 | 0,8 |
| 6 | 14,1 | 19,6 | 1,65 | 42 | 880 | 420 | 18 | 1,1 |
| 7 | 16,3 | 22,2 | 1,68 | 42 | 880 | 390 | 19 | 0,7 |
| 8 | 16,3 | 22,2 | 1,68 | 42 | 880 | 450 | 18 | 0,8 |

*) valeur à 0,005 près.

| Essais | % TPP |
|---|---|
| 0 | > 98% |
| 1 | > 92% |
| 2 | > 90% |

Par ailleurs, les TPP obtenus selon les essais 1 à 8 ne présentent pas d'insolubles.

On doit remarquer en particulier qu'un TPP selon l'essai 5, à 37% de phase I, ne conduit à aucune prise en masse selon le test décrit ci-après, avec une perte en eau à 150° C inférieure à 0,05%.

Dans les mêmes conditions, selon un procédé de l'art antérieur, un TPP anhydre et de même taux en phase I conduit à une prise en masse très importante.

Un TPP de taux de phase I moitié du précédent selon l'essai 7 ne conduit à aucune prise en masse au cours du temps, alors qu'un TPP anhydre (c'est-à-dire de même perte en eau à 150° C) de même taux de phase I selon l'art antérieur, prend en masse.

Ces exemples aux résultats surprenants, illustrent bien que la coopération des moyens de l'invention réalise une fonction nouvelle pour conduire à un nouveau résultat.

Test de solubilisation: 7 g de TPP sont ajoutés rapidement (2 secondes) dans 20 ml d'eau distillée. On note l'aspect et la dureté du TPP non dissout, 2, 5, 10 et 20 mn après l'ajout.

Exemple 3

Cet exemple a pour but d'illustrer un autre intérêt de l'invention qui permet d'éviter la ségrégation cristalline. Pour ce faire, afin de pouvoir récupérer l'orthophosphate, on abaisse la température dans la zone isotherme afin d'éviter la calcination, en revanche l'écart de température reste le même entre l'entrée et la sortie de la zone b pour la phase dispersante.

Une solution contenant 15,8% de $P_2O_5$ et 11,5% de $Na_2O$ (Na/P = 1,667) maintenue à 40°C est pulvérisée avec un débit de 10 litres/heure dans un gaz chaud (Te = 640° C; 50 $Nm^3/h$) où elle subit un séchage par effet flash. La température de sortie des gaz et du produit solide est de 145° C. L'analyse chromatographique met en évidence la présence exclusive d'orthophosphate et les spectres RX et IR montrent que cette phase cristalline n'est en aucun cas un mélange de deux phases telles que $NaH_2PO_4$, $Na_3H_3(PO_4)_2$. Le rapport Na/P dosé par potentiométrie est égal à 1,663. On peut donc attribuer à ce nouvel orthophosphate la formule $Na_5H_4(PO_4)_3$. Le tableau ci-dessous donne la liste des distances réticulaires et intensités de raie obtenues par diffractométrie en réflexion (Générateur Siemens K 805 avec rayonnement monochromatique CuK$\alpha$ et compteur proportionnel); elles permettent de caractériser sans ambiguité ce produit.

| N° raie | d Å | Intensités estimées |
|---|---|---|
| 1 | 8,9 | ttf |
| 2 | 5,35 | tf |
| 3 | 4,68 | f |
| 4 | 4,63 | f |
| 5 | 3,85 | m |
| 6 | 3,81 | mf |
| 7 | 3,75 | m |
| 8 | 3,67 | mF |
| 9 | 3,66 | m |

Suite

| N° raie | d Å | Intensités estimées |
|---|---|---|
| 10 | 3,63 | m |
| 11 | 3,33 | tf |
| 12 | 3,28 | mf |
| 13 | 3,15 | tf |
| 14 | 2,77 | F |
| 15 | 2,72 | mF |
| 16 | 2,71 | m |
| 17 | 2,68 | mF |
| 18 | 2,64 | FF |
| 19 | 2,54 | f |

N.B. FF: intensité très forte
F: intensité forte
mF: intensité moyennement forte
m: intensité moyenne
mf: intensité moyennement faible
f: intensité faible
tf: intensité très faible
ttf: intensité très très faible

Ces exemples illustrent donc bien l'intérêt de l'invention qui permet en quelque sorte de réaliser certains types d'évolutions qu'il est impossible de contrôler autrement, et que l'on peut appréhender de manière analogique à une évolution catalytique.

Ceci peut être illustré par les considérations suivantes:

1) Dans le domaine considéré, l'on est en présence de deux espèces stables: l'orthophosphate monosodique et l'orthophosphate disodique, et d'espèces métastables plus ou moins connues qui nécessitent des niveaux de sursaturation plus élevée pour leur cristallisation.
   Le fait que l'on cristallise une espèce métastable inconnue jusqu'alors, montre que l'on atteint des niveaux de sursaturation importante, ce qui correspond à des espèces activées au sens catalytique du terme;
2) L'on apporte deux espèces, les orthosphosphates mono et disodique dans une stoechiométrie déterminée. Le fait de retrouver dans le produit final la stoechiométrie de départ, en une seule phase solide laisse supposer que, dans ces conditions, la vitesse de cristallisation du composé métastable n'est pas très inférieure à celle de cristallisation du composé stable, et qu'elle est supérieure à la vitesse de diffusion des constituants en solution. Ainsi le composé dont la formation demande la plus faible énergie de diffusion sera fortement favorisée. Ceci correspond à prédéterminer une espèce cristallisante en fonction d'une stoechiométrie de départ.

Un autre exemple d'application du procédé résulte de la fabrication des polyphosphates acides.

Exemple 4

Thermocondensation d'orthophosphate de rapport Na/P = 1

On sait que la thermocondensation de tels orthophosphates dans un intervalle de températures compris entre 180 et 450°C, conduit à des polyphosphates tels que le pyroacide ou $(NaPO_3)_n$. Ces derniers composés peuvent être soit des polyphosphates solubles (linéaires ou cycliques), soit des polyphosphates insolubles.

Les polyphosphates acides sont des produits des étapes chimiques intermédiaires entre le pyroacide et $(NaPO_3)_n$ et répondent aux formules générales $Na_nH_2P_nO_{3n+1}$ $(n>2)$.

Ces polyphosphates acides ne peuvent être isolés actuellement que par des procédés de laboratoire. Ainsi on peut préparer $Na_3H_2P_3O_{10}$ en précipitant par l'éthanol une solution de TPP acidifiée par la quantité théorique de HCl.

La demanderesse ne connait aucun procédé industriel de préparation par thermocondensation d'un tel produit, alors que la thermocondensation est en soi connue depuis longtemps.

Selon l'invention:

- on prépare une solution d'orthophosphates de sodium, de rapport Na/P voisin de 1, en ajustant la valeur de ce rapport à la valeur du rapport Na/P dans le produit final,
- on alimente cette solution selon l'axe d'un écoulement puits-tourbillon symétrique jusque dans la zone de dépression dudit écoulement.
- on impartit audit écoulement puits-tourbillon symétrique une quantité de mouvement de la phase gazeuse, suffisante pour provoquer la dispersion et le traitement de la phase liquide par la phase gazeuse,
- on confère à la phase gazeuse une températeure comprise, dans la zone isotherme homogène, entre 180 et 450° C, et avantageusement entre 230 et 320° C.

Le taux de polyphosphates acides $(n>2)$ obtenu dépend de la température. Dans le domaine 250—320° C, il est de l'ordre d'au moins 50% et de préférence 80%, les autres composés étant du pyroacide, de l'orthophosphate et éventuellement de faibles quantités de polyphosphates cycliques.

Ainsi, le procédé selon l'invention, permet d'obtenir de manière industrielle un produit connu en soi mais impossible à obtenir de manière simple.

Un tel produit trouve son application notamment dans le domaine alimentaire et dans la détergence.

Pratiquement on a réalisé l'essai suivant:

Une solution aqueuse à 370 g/l de $NaH_2PO_4$ est introduite dans le conduit axial 8.

La température d'entrée de l'air chaud dans l'espace annulaire est de 720° C.

Les réglages de débits d'air et de liquide permettent de réaliser dans le bicône 2 une zone isotherme et homogène à 286° C qui est considérée comme la température de transformation chimique pour cet exemple.

On obtient un produit solide de composition:

| | |
|---|---|
| — $NaH_2PO_4$ | 4% |
| — $Na_2H_2PSO_7$ | 16,2% |
| — polyphosphates acides | 76,4% |
| — insolubles | 0% |

Le pH d'une solution à 1% d'une telle composition est de 4,86.

Ici encore tout le procédé est déterminé à partir de la zone c, en tenant compte des nécessités de l'échange thermique.

Par ailleurs, l'obtention d'un polyphosphate acide de haute pureté est conditionnée par le strict respect des conditions thermodynamiques de formation de ce polyphosphate (température et pression d'eau) appartenant à un domaine de stabilité de ce composé.

Or ce domaine de stabilité est très étroit. En cas de non respect de cette contrainte de fonctionnement (température du produit s'élevant accidentellement), la formation d'un composé indésirable de dégradation intervient.

Or l'endothermicité correspondant au séchage est nettement supérieure à celle des réactions de thermocondensation, ce qui signifie qu'un faible excès par rapport à l'énergie nécessaire et suffisante au séchage est susceptible de transformer et de détruire la totalité du produit recherché, si celui-ci n'a pas été placé dans des conditions thermodynamiques permettant d'éviter cette éventualité.

L'exemple précédent illustre donc bien la notion de distribution spécifique de l'énergie thermique qui correspond au procédé de l'invention.

Par ailleurs, on peut préparer, selon l'invention, un certain nombre de phosphates. Les exemples 5, 6, 7, 8 sont illustratifs des orthophosphates de sodium et de potassium. Les exemples 9, 10, 11, 12, 13 sont illustratifs des polyphosphates. On doit noter que dans le cas des orthophosphates, la température de sortie est faible, inférieure à 180°C, alors que dans le cas des polyphosphates, elle est beaucoup plus élevée.

Exemple 5

$NaH_2PO_4$ (Dihydrogénophosphate de sodium)

Une solution contenant 17,75% $P_2O_5$ et 7,75% $Na_2O$

$$\left(\frac{Na}{P} = 1,00\right)$$

est pulvérisée par un courant d'air chauffé à 600° C ayant un débit de 50 nm³/h. Le débit de la solution est ajusté de façon à obtenir une température de sortie des gaz et du produit de 150° C.

Le produit que in résulte est uniquement formé d'orthophosphate monosodique (dihydrogénophosphate de sodium) de densité apparente 0,7 possédant une perte en eau à 150° C inférieure à 0,3%.

Exemple 6

$Na_2HPO_4$ (Monohydrogénophosphate de sodium)

Une solution contenant 15,0% $P_2O_5$, 13,1% $Na_2O$

$$\left(\frac{Na}{P} = 2,00\right)$$

et les impuretés suivantes: — ($Na_2SO_4$: 3,0%;, NaF: 0,2%; $SiO_2$: 0,1%; NaCl:0,4%; Ca: 500 ppm; Mg: 400 ppm, somme des autres impuretés métalliques: 1000 ppm) —, est pulvérisée par un courant d'air chauffé à 570° C ayant un débit de 55 $Nm^3/h$. Le débit de la solution est ajusté de façon à obtenir une température de sortie des gaz et du produit de 125° C.

Le produit qui en résulte est uniquement formé d'orthophosphate disodique (monohydrogénophosphate de sodium) de densité apparente 0,57 possédant une perte en eau à 150° C inférieure à 0,6%.

Exemple 7

$Na_3PO_4$ (Monophosphate de trisodium)

Une solution contenant 9,1% $P_2O_5$ et 12% $Na_2O$

$$\left(\frac{Na}{P} = 3,02\right)$$

est pulvérisée par un courant d'air chauffé à 600° C ayant un débit de 60 $Nm^3/h$. Le débit de la solution est ajusté de façon à obtenir une température de sortie des gaz et du produit de 170° C.

Le produit qui en résulte est uniquement formé d'orthophosphate trisodique (monophosphate de trisodium) de densité apparente 0,35 possédant une perte en eau à 150° C inférieure à 0,2%.

Exemple 8

$K_2HPO_4$ (Monohydrogénophosphate de potassium)

Une solution contenant 21,6% $K_2O$ et 16,3% $P_2O_5$

$$\left(\frac{K}{P} = 2,00\right)$$

est pulvérisée par un courant d'air chauffé à 600° C ayant un débit de 50 $Nm^3/h$. Le débit de la solution est ajusté de façon à obtenir une température de sortie des gaz et du produit de 150° C.

Le produit qui en résulte ne contient que de l'orthophosphate dipotassique (monohydrogénophosphate de potassium) de densité apparente 0,50 et ayant une perte en eau à 150° C inférieure à 0,4%.

## Exemple 9

$Na_2H_2P_2O_7$ (Dihydrogénodiphosphate de sodium)

Ce pyrophosphate $Na_2H_2P_2O_7$ est un intermédiaire de température lors de la calcination de $NaH_2PO_4$ en insoluble $(NaPO_3)_n$ ou en trimetaphosphate $(NaPO_3)_3$ cyclique.

Son application en particulier dans l'industrie alimentaire comme agent acide (levure, sel de fonte) nécessite l'absence de phosphate insoluble ou cyclique. On montre qu'à partir de l'orthophosphate monosodique obtenu par le procédé selon l'invention, on peut obtenir par chauffage au four, un pyroacide à la fois sans insoluble (inférieur à 0,02%), sans trimetaphosphate (inférieur à 0,2%) et sans orthophosphate monosodique (dihydrogénophosphate de sodium) (inférieur à 0,2%).

On attribue ce résultat inattendu à la conjonction de plusieurs paramètres, tels que la température de calcination, le rapport molaire $\frac{Na}{P}$ de l'orthophosphate et la pression partielle d'eau dans le four mais aussi et surtout à une cristallinité de l'orthophosphate qui ne peut être obtenu que par le procédé selon l'invention.

Exemple: L'orthophosphate $NaH_2PO_4$ est celui obtenu suivant les conditions de l'exemple 5.

On fait subir à cet orthophosphate un chauffage à 250° C dans un four tubulaire avec une pression partielle d'eau ajoutée de 133, $10^2$ Pa pendant 1 heure; on obtient alors du pyroacide (dihydrogénodiphosphate de sodium) sans impuretés phosphatées, c'est-à-dire avec un taux d'insoluble inférieur à 0,02% et des taux de trimetaphosphate et d'orthophosphate inférieurs à 0,2%. Ce pyroacide a une densité apparente de 0,55 et une répartition granulométrique resserrée (80% entre 15 et 60 μm).

## Exemple 10

$Na_4P_2O_7$ (Diphosphate de tétrasodium)

Une solution contenant 13,1% $Na_2O$ et 15% $P_2O_5$

$$\left(\frac{Na}{P} = 2,0\right)$$

est pulvérisée par un courant d'air chauffé à 815° C ayant un débit de 45 $Nm^3/h$. Le débit de la solution est ajusté de façon à obtenir une température de sortie des gaz et du produit de 425° C. On obtient alors du pyrophosphate neutre (diphosphate de tétrasodium) (supérieur à 99,8%) sans impureté d'orthophosphate (monohydrogénophosphate de sodium et/ou phosphate de trisodium ou tripolyphosphate de sodium (triphosphate de sodium) (inférieur à 0,2%) et de densité apparente voisine de 0,4.

## Exemple 11

$K_4P_2O_7$ (Diphosphate de tétrapotassium)

Une solution contenant 27,05% $K_2O$ et 20,4% $P_2O_5$

$$\left(\frac{K}{P} = 2,00\right)$$

est pulvérisée par un courant d'air chauffé à 920° C ayant un débit de 55 $Nm^3/h$. Le débit de la solution est ajusté de façon à obtenir une température de sortie des gaz et du produit de 500° C. On obtient alors du pyrophosphate neutre de potassium (triphosphate de tétra potassium) à un taux supérieur à 99,5% sans impuretés orthophosphate (monohydrogénophosphate de potassium et/ou phosphate de tripotassium) ou tripolyphosphate (triphosphate de potassium) (inférieur à 0,2%) et sans insoluble (inférieur à 0,02%). La densité apparente du produit est voisine de 0,25 et il possède une très grande vitesse de solubilisation.

## Calcination en four des orthophosphates

Il est possible d'obtenir des pyrophosphates neutres de sodium et de potassium (diphosphates de tétrasodium et de tétrapotassium) de densités plus élevées que ceux des exemples 10 et 11, en procédant respectivement à la calcination en four des orthophosphates $Na_2HPO_4$ et $K_2HPO_4$ obtenus par séchage au moyen du procédé selon l'invention.

Exemple 12

$Na_4P_2O_7$ (Diphosphate de tétrasodium)

On introduit dans un four tubulaire chauffé à 350°C l'orthophosphate $Na_2HPO_4$ (monohydrogénophosphate de sodium) obtenu suivant le procédé décrit dans l'exemple 6. Le temps de chauffage en régime isotherme est de deux heures. On obtient alors du pyrophosphate neutre de sodium $Na_4P_2O_7$ (diphosphate de tétrasodium) exempt d'impuretés phosphatées (monohydrogénophosphate de sodium et/ou phosphate de trisodium (orthophosphates) ou tripolyphosphate de sodium inférieurs à 0,2%). La densité apparente du produit est voisine de 0,60.

Exemple 13

$K_4P_2O_7$ (diphosphate de tétrapotassium)

On introduit dans un four tubulaire chauffé à 450° C l'orthophosphate (monohydrogénophosphate de potassium) $K_2HPO_4$, obtenu suivant le procédé décrit dans l'exemple 8. Le temps de chauffe en régime isotherme est de 2 heures. On obtient alors du pyroneutre de potassium $K_4P_2O_7$ (diphosphate de tétrapotassium) exempt d'impuretés orthophosphate (monohydrogénophosphate de potassium) et/ou phosphate de tripotassium ou tripolyphosphate (triphosphate de potassium) (inférieur à 0,2%) et sans insoluble (inférieur à 0,02%). La densité apparente du produit est voisine de 0,4.

Bien évidemment les exemples précédents ne sont pas limitatifs et on ne sortirait pas du cadre de l'invention en jouant par exemple sur l'exothermicité ou l'endothermicité des réactions qui peuvent avoir lieu dans l'une ou l'autre zone réactive, ou en provoquant un enchainement de réactions plus complexes, ou en jouant sur une composition chimique particulière obtenue dans la zone c.

On voit ainsi tout l'intérêt de la présente invention qui procède d'une démarche tout à fait nouvelle.

## Revendications

1. Procédé de traitement thermique d'une phase dispersable fluide telle que notamment liquide, semi-liquide, ou pulvérulente par une phase gazeuse dispersante caractérisée par le fait que, successivement et sans discontinuité, par action de la phase gazeuse:

a) on transforme la phase dispersable en une dispersion de volumes élémentaires, tels que fines particules solides ou liquides, sensiblement équirépartis dans ladite phase gazeuse de manière à obtenir un mélange systématiquement homogène des deux phases dispersable et dispersante;
b) on fait subir à cette dispersion par échange thermique à l'aide de la phase dispersante un traitement thermique flash dans une zone à écoulement de type piston;
c) on soumet la dispersion issue de la zone b, dans une zone à écoulement homogène au sens de la répartition des temps de séjour, à un traitement sensiblement isotherme en phase gazeuse chimiquement homogène.

2. Procédé selon la revendication 1, caractérisé par le fait que la température d'entrée de la phase dispersante à l'entrée de la zone b est réglée par la température et/ou la composition chimique de la zone c et par le gradient de température de la phase dispersante dans la zone b de manière à ce que l'échange thermique ait lieu de façon sélective dans la zone b.

3. Procédé selon l'une des revendications 1 et 2, caractérisé par le fait que l'on effectue une transformation endothermique dans la zone b, suivie d'une seconde transformation endothermique ou exothermique dans la zone c.

4. Procédé selon l'une des revendications 1 et 2, caractérisé par le fait que l'on réalise un écoulement puits-tourbillon symetrique grâce à ladite phase gazeuse dispersante, que l'on introduit axialement sous forme liquide la phase dispersable à traiter jusque dans la zone de dépression de l'écoulement puits-tourbillon en impartissant audit écoulement puits-tourbillon une quantité de mouvement suffisante par rapport à la phase introduite axialement de manière à provoquer la dispersion de cette phase liquide par transfert de la quantité de mouvement et son traitement par la phase gazeuse dans la zone piston formée par l'écoulement puits-tourbillon, puis à laisser le traitement se poursuivre dans la zone agitée qui suit la zone piston de l'écoulement puits-tourbillon, la température d'entrée des gaz chauds étant réglée de manière à former dans la zone en aval de la zone piston une zone sensiblement isotherme et chimiqement homogène.

5. Procédé selon la revendication 4, caractérisé par le fait que la vitesse de la phase dispersible est inférieure à 10 m/sec. et de préférence à 5 m/sec., que le rapport de la quantité de mouvement de la phase gazeuse à celle de la phase dispersible est au moins égal à 100 et de préférence situé entre 100

et 10 000, et que la pression sur la phase gazeuse est inférieure à $10^5$ Pa et est avantageusement compris entre 0,4 et 0,6 $10^5$ Pa, au-dessus de la pression moyenne dans la zone c.

6. Application du procédé selon l'une des revendications 1, 2, 4 et 5, à la préparation de polyphosphates acides de Na par thermocondensation d'orthophosphates caractérisé par le fait que:

— on prépare une solution d'orthophosphates de sodium, de rapport Na/P voisin de 1, en ajustant la valeur de ce rapport à la valeur du rapport Na/P dans le produit final,
— on alimente cette solution selon l'axe d'un écoulement puits-tourbillon symétrique jusque dans la zone de depression dudit écoulement,
— on impartit audit écoulement puits-tourbillon symétrique une quantité de mouvement de la phase gazeuse suffisante pour provoquer la dispersion et le traitement de la phase liquide par la phase gazeuse,
— on confère à la phase gazeuse une température comprise, dans la zone isotherme homogène, entre 180 et 450° C, et avantageusement entre 230 et 320° C.

## Patentansprüche

1. Verfahren zur Wärmebehandlung einer zerstäubbaren fließfähigen Phase, die vor allem einer flüssigen, halbflüssigen oder pulverförmigen Phase, mit einer zerstäubenden Gasphase, dadurch gekennzeichnet, daß man aufeinanderfolgend und ohne Diskontinuität durch Einwirkung der Gasphase

a) die zerstäubbare Phase in eine Dispersion von Elementarvolumina wie feinen, festen oder flüssigen Teilchen umwandelt, die im wesentlichen in der genannten Gasphase gleichmäßig verteilt sind, so daß man ein systematisch homogenes Gemisch der beiden zerstäubbaren und zerstäubenden Phasen erhält;
b) diese Dispersion durch Wärmeaustausch mit der zerstäubenden Phase einer Wärmeschnellbehandlung in einer Zone mit Kolbenströmung unterwirft;
c) die aus der Zone b) austretende Dispersion in einer Zone mit hinsichtlich der Verteilung der Verweilzeiten homogener Strömung einer im wesentlichen isothermen Behandlung in (einer) chemisch homogenen Gasphase unterwirft.

2. Verfahren nach Anspruch 1, dadurch gekennzeichnet, daß die Eintrittstemperatur der zerstäubenden Phase beim Eintritt in die Zone b) durch die Temperatur und/oder die chemische Zusammensetzung der Zone c) und durch den Temperaturgradienten der zerstäubenden Phase in der Zone b) so geregelt wird, daß der Wärmeaustausch selektiv in der Zone b) stattfindet.

3. Verfahren nach Anspruch 1 oder 2, dadurch gekennzeichnet, daß man in der Zone b) eine endotherme Umwandlung durchführt, gefolgt von einer zweiten, endothermen oder exothermen Umwandlung in der Zone c).

4. Verfahren nach Anspruch 1 oder 2, dadurch gekennzeichnet, daß man mit Hilfe der genannten zerstäubenden Gasphase eine symmetrische, schraubenförmig sich verengende Strömung erzeugt, daß man die zerstäubbare Phase, die behandelt werden soll, in flüssiger Form axial bis zur Unterdruckzone der schraubenförmig sich verengenden Strömung einführt, indem man der schraubenförmig sich verengenden Strömung eine mit Bezug auf die axial eingeführte Phase eine ausreichende Bewegungsgröße erteilt, um die Zerstäubung dieser flüssigen Phase durch Übertragung der Bewegungsgröße sowie ihre Behandlung mit der Gasphase in der durch die schraubenförmig sich verengende Strömung entstandene Kolbenzone hervorzurufen und daß man dann diese Behandlung sich in der bewegten Zone fortsetzen läßt, die auf die Kolbenzone der schraubenförmig sich verengenden Strömung folgt, wobei die Eintrittstemperatur der Heißgase so geregelt wird, daß in der in Strömungsrichtung hinter der Kolbenzone liegenden Zone ein im wesentlichen isothermer und chemisch homogener Bereich ausgebildet wird.

5. Verfahren nach Anspruch 4, dadurch gekennzeichnet, daß die Geschwindigkeit der zerstäubbaren Phase weniger als 10 m/s, vorzugsweise weniger als 5 m/s beträgt, daß das Verhältnis von Bewegungsgröße der Gasphase zu Bewegungsgröße der zerstäubbaren Phase mindestens 100 beträgt und vorzugsweise zwischen 100 und 10 000 liegt, und daß der Druck auf die Gasphase weniger als $10^5$ Pa und vorteilhafterweise 0,4 bis 0,6 · $10^5$ Pa über dem mittleren Druck in der Zone c) ausmacht.

6. Anwendung des Verfahren nach einem der Ansprüche 1, 2, 4 und 5 zur Herstellung von sauren Na-Polyphosphaten durch Thermokondensation von Orthophosphaten, dadurch gekennzeichnet, daß man

— eine Lösung von Natriumorthophosphaten mit einem Verhältnis Na/P von etwa 1 herstellt, indem man den Wert dieses Verhältnisses auf den Wert des Verhältnisses Na/P im Endprodukt einstellt,
— diese Lösung entlang der Achse einer symmetrischen schraubenförmig sich verengenden Strömung bis in die Unterdruckzone dieser Strömung einführt,

— der symmetrischen schraubenförmig sich verengenden Strömung eine ausreichende Bewegungsgröße der Gasphase erteilt, um die Zerstäubung und die Behandlung der flüssigen Phase mit der Gasphase zu bewirken (und)
— die Gasphase bei einer Temperatur hält, die in der isothermen homogenen Zone 180 bis 450° C, vorzugsweise 230 bis 320° C beträgt.

**Claims**

1. A process for thermal treatment of a fluid dispersible phase such as in particular a liquid, semi-liquid or powder phase, by a dispersant gaseous phase, characterised in that, successively and without a break, by the action of the gaseous phase:

a) the dispersible phase is transformed into a dispersion of elementary volumes such as fine solid or liquid particles which are substantially equally distributed in said gaseous phase so as to provide for systematically homogeneous mixing of the two dispersible and dispersant phases;
b) said dispersion is subjected by heat exchange by means of the dispersant phase to a thermal flash treatment in a plug-type flow zone;
c) in a zone having a flow which is homogeneous in the sense of the distribution of the residence times, the dispersion from zone b is subjected to a substantially isothermal treatment in chemically homogeneous gaseous phase.

2. A process according to claim 1 characterised in that the inlet temperature of the dispersant phase at the inlet of the zone b is regulated by the temperature and/or chemical composition of the zone c and by the temperature gradient of the dispersant phase in the zone b in such a manner that heat exchange occurs selectively in the zone b.

3. A process according to one of claims 1 and 2 characterised by effecting an endothermic transformation operation in zone b followed by a second endothermic or exothermic transformation operation in zone c.

4. A process according to one of claims 1 and 2 characterised by providing for a symmetrical axial flow-vortex flow configuration by means of said gaseous dispersant phase, and axially introducing the dispersible phase to be treated, in liquid form, into the depression zone of the axial flow-vortex configuration by imparting to said flow configuration a sufficient momentum with respect to the axially introduced phase to cause dispersion of said liquid phase by transfer of the momentum and treatment thereof by the gaseous phase in the plug-flow zone formed by the axial flow-vortex configuration, the leaving the treatment to continue in the agitated zone which follows the plug-flow zone of the axial flow-vortex flow configuration, the inlet temperature of the hot gases being so regulated as to form a substantially isothermal and chemically homogeneous zone in the zone downstream of the plug-flow zone.

5. A process according to claim 4 characterised in that the speed of the dispersible phase is lower than 10 m/sec and preferably lower than 5 m/sec, that the ratio of the momentum of the gaseous phase to that of the dispersible phase is at least equal to 100 and is preferably between 100 and 10 000, and that the pressure on the gaseous phase is lower than $10^5$ Pa and is advantageously between 0.4 and 0.6 $10^5$ Pa above the mean pressure in the zone c.

6. Use of the process according to one of claims 1, 2, 4 and 5 for the preparation of acid polyphosphates of Na by thermocendensation of orthophosphates characterised by:

— preparing a solution of sodium orthophosphates, with a Na/P ratio of close to 1, with adjustement of the value of that ratio to the value of the Na/P ratio in the final product,
— feeding said solution along the axis of a symmetrical axial flow-vortex flow configuration into the depression zone of said flow configuration,
— imparting to said symmetrical axial flow-vortex flow configuration a momentum of the gaseous phase sufficient to cause dispersion and treatment of the liquid phase by the gaseous phase, and
— imparting to the gaseous phase a temperature which, in the homogeneous isothermal zone, is between 180 and 450° C and advantageously between 230 and 320° C.

FIG. 1

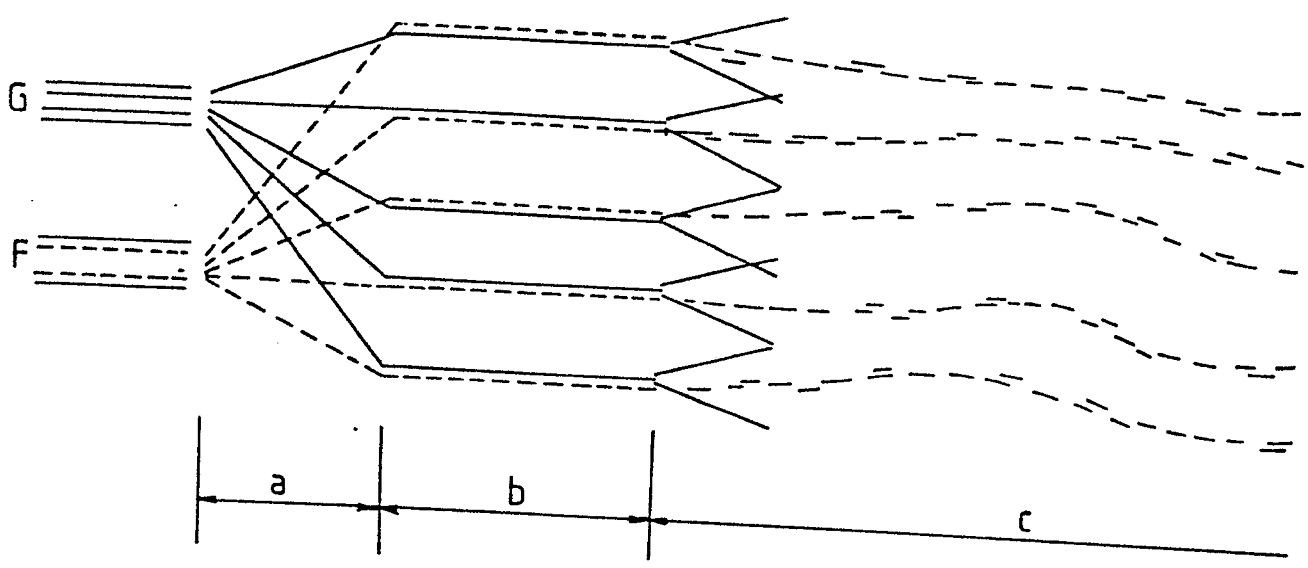


FIG. 2

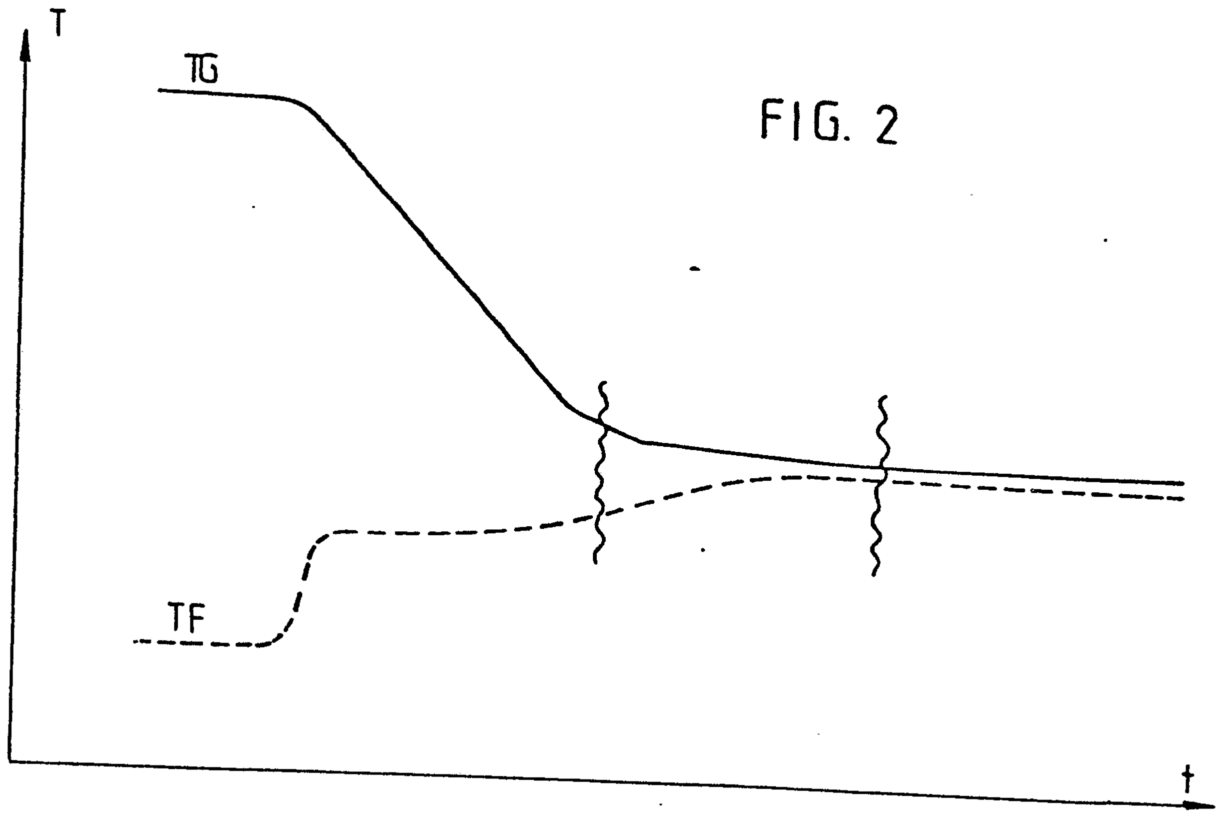


FIG. 3

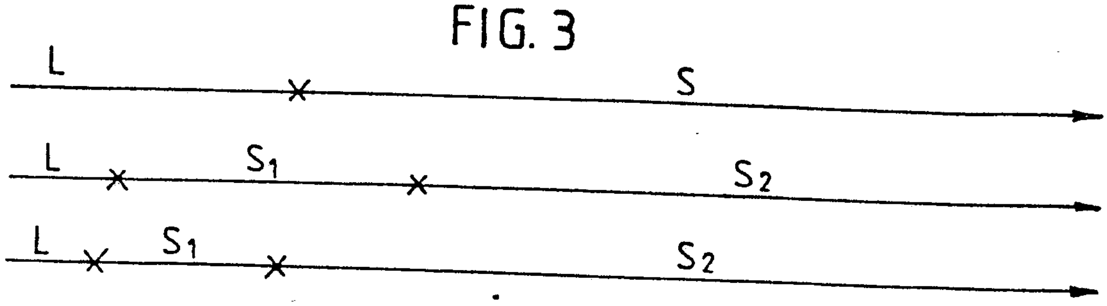

FIG. 4